# EUROPEAN PATENT SPECIFICATION

(11) **EP 1 202 033 B1**
(45) Date of publication and mention of the grant of the patent: **13.12.2006**
(21) Application number: 01125139.4
(22) Date of filing: 23.10.2001
(51) Int. Cl.: G01N 21/21, G02B 5/04

(54) **Spectral ellipsometer**
Spektralellipsometer
Ellipsomètre spectral

(30) Priority: 25.10.2000 JP 2000325362
(43) Date of publication of application: 02.05.2002
(73) Proprietor: HORIBA, LTD., Kyoto (JP)
(72) Inventor: Otsuki, Kunio, c/o Horiba, Ltd., Kyoto (JP); Saijo, Yutaka, c/o Horiba, Ltd., Kyoto (JP)
(74) Representative: Müller - Hoffmann & Partner

(56) References cited:
- US-A- 4 053 232
- US-A- 5 581 350

## Description

### BACKGROUND OF THE INVENTION

### Field of the Invention

The present invention relates to a spectral ellipsometer for observing changes in polarizing conditions of light reflected on a surface of a substance and for measuring optical constants (index of refraction, extinction coefficient) of the substance and in case a thin film layer should be present on a surface of the substance, its film thickness and optical constants as well.

### Description of the Prior Art

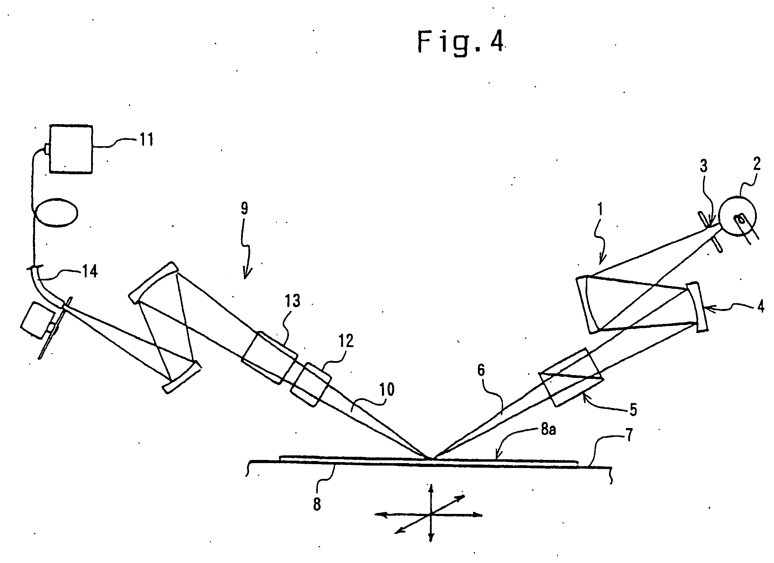

As illustrated in Fig. 4, upon making a linear polarization 6 incident from oblige upward onto a surface 8a of a sample 8 formed with a thin film on its surface, polarizing conditions of reflected light will change depending on thickness, index of refraction and extinction coefficient of the thin film formed on the sample surface 8a, the thin film being an object of measurement.

This is due to the fact that a difference in reflected light exists between P polarization and S polarization depending on respective shifts in phase of reflection and reflection coefficient, and it is possible to obtain the thickness of the thin film or index of refraction of the sample surface 8a upon measuring an amount of change in polarization of the reflected light and performing analytic calculations.

It is currently being sought for evaluation of film qualities of ultra-thin films in recent fields of semiconductors since gate oxide films and low-absorption films that become increasingly thinner are being employed in new generation devices. It is further being sought for accurately evaluating multi-layered structures that are employed in flash memories and in which oxide films and nitride films of silicon are alternately laminated or multi-layered films formed on SOI wafers or the like.

Owing to the same reasons, it is especially being paid attention to spectral ellipsometers among ellipsometers that are capable of performing highly accurate measurements to cover a wide region of wavelengths ranging from ultraviolet to visible or infrared radiation and that are further capable of performing measurement of dependency of thin film properties on wavelengths.

While a spectral ellipsometer is provided with a polarizer for changing light of multiwavelengths into linear polarization 6, such a spectral ellipsometer is generally provided with a prism 5 to serve as a polarizer since it may be used in a wide range of wavelength regions from visible light to ultraviolet region and further in view of optical quenching ratio, transmittance and the like.

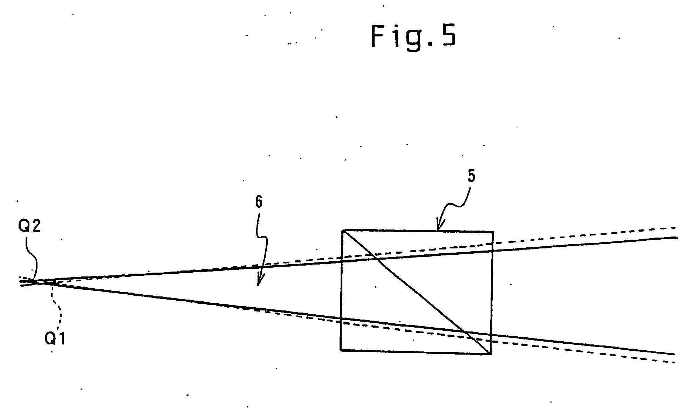

However, since such a prism 5 has a thickness ranging from approximately 10 mm to several tens of mm, it will be impossible to focus all optical axes of the wide variety of wavelength regions onto one spot owing to differences in, for instance, indices of refraction with respect to wavelengths of light when reducing a beam diameter, and could result in a drawback of chromatic aberration, for example, as illustrated in Fig. 5 in which a focusing position Q2 of an optical axis of light having a long wavelength is remoter when compared to a focusing position Q1 of an optical axis of light having a short wavelength.

In this context, the term "chromatic aberration" indicates differences in indices of refraction owing to wavelengths, that is, aberrations resulting from dispersion (defects caused in case an image forming system does not satisfy conditions for Gauss image formation).

The present invention has been made in view of the above facts, and it is an object thereof to provide a spectral ellipsometer with which it is possible to easily focus all optical axes of multiwavelengths onto one spot by means of a remarkably simple and rational improved technique.

### SUMMARY OF THE INVENTION

To solve this object, the present invention provides a spectral ellipsometer comprising a light incidence optical system for achieving spot incidence of polarization light of multiwavelengths onto a sample surface and a detecting optical system for outputting information concerning the sample surface, said information being based on an amount of change in polarization of elliptical polarization reflected by the sample surface. The light incidence optical system comprises a light source and a polarizer, wherein said polarizer is a prism, and respective shapes of a light-incident surface and a light-outgoing surface of said prism are curved surfaces that are orthogonal with respect to a progressing direction of respective directions of incident and outgoing light (hereinafter referred to as "spherical prism").

Preferred embodiments of the present invention are defined in dependent claims 2 to 5.

According to this improved technique, the light-incident surface and light-outgoing surface of the spherical prism will, in a macroscopic sense, be orthogonal with respect to all optical axes of incident light so that it is possible to completely eliminate phenomena of refraction of incident light and to focus, when using a wide range of wavelengths region, all optical axes onto one spot in the entire wavelengths region so thereby prevent occurrence of chromatic aberration in an effective manner.

### BRIEF DESCRIPTION OF THE DRAWINGS

Fig. 1 is a schematic view of a spectral ellipsometer.
Fig. 2 is an explanatory view for illustrating a condition in which optical axes are focus ed onto one spot by using a spherical prism.
Fig. 3(A) and Fig. 3(B) are schematic views of the spherical prism according to different embodiments, respectively.
Fig. 4 is a schematic view of a spectral ellipsometer according to the prior art.
Fig. 5 is an explanatory view for illustrating a condition of refraction of an optical axis when using a conventional prism.

### DETAILED DESCRIPTION OF THE PREFERRED EMBODIMENTS

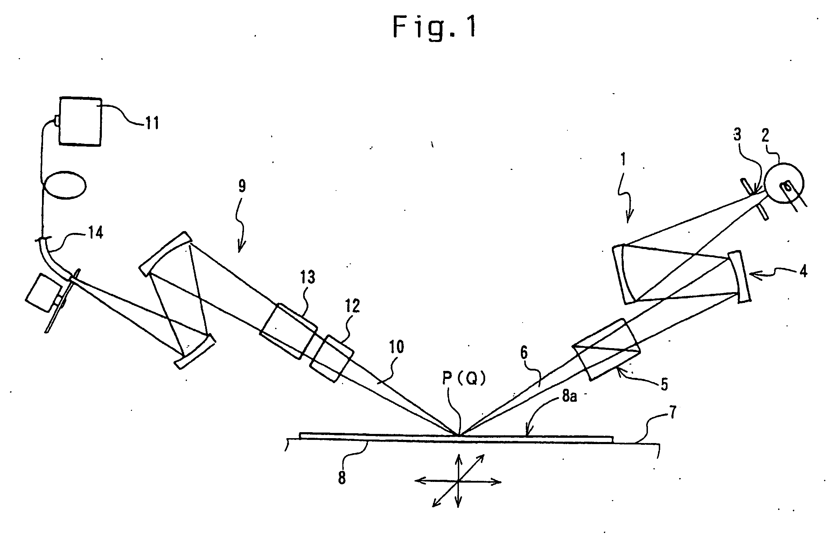

An embodiment of the present invention will now be explained based on the drawings. Fig. 1 illustrates one embodiment of the spectral ellipsometer according to the present invention. In Fig. 1, 1 denotes a light incidence optical system and may be constituted of a white-colored light source 2 which is a xenon lamp or similar for making light of a wide wavelength region ranging from, for instance, 190 to 830 nm incident, a slit 3, a beam reducing optical system (which may, for instance, be constituted of two concave lenses) 4, and a prism 5 serving as a polarizer for maintaining a polarizing direction constant.

The light incidence optical system 1 functions to reduce light of multiwavelengths from the light source 2 to be a linear polarization 6 of a predetermined polarizing direction that is then made spot incident from oblique upward at a predetermined angle onto a sample surface 8a of a sample 8 placed on a stage 7, wherein the stage 7 is arranged to be drivable in three dimensional directions, namely horizontal X-Y directions and an orthogonal Z direction, and wherein the sample 8 is sucked and maintained on the stage 7 through vacuum force.

The reference numeral 9 denotes a detecting optical system for outputting information concerning an amount of change in polarization of elliptical polarization 10 that has been reflected by the sample surface 8a on the stage 7 to, for instance, a spectroscope 11, and is constituted of a photoelastic modulator 12, an analyzer 13 and an optical fiber 14 for outputting signals to the spectroscope 11.

Incident light of a plurality of wavelengths that went out from the white-colored light source 2 is reduced in beam diameter by the beam reducing optical system 4 and is polarized in a predetermined direction by the prism 5 that serves as the polarizer.

The prism 5 is a spherical prism 5 with a shape of a light-incident surface and light-outgoing surface thereof being a curved surface that is orthogonal with respect to a progressing direction of the respective directions of incident and outgoing light, and is constituted in this embodiment as a spherical prism 5 with its center P being defined to be a spot incident point of the linear polarization 6 with respect to the sample surface 8a.

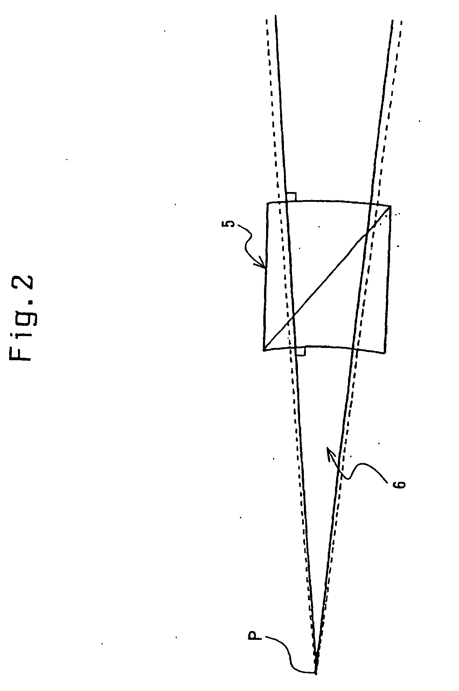

By arranging the prism 5 to be spherical, incident light and outgoing light of the spherical prism 5 will become orthogonal to all optical axes of incident light as illustrated in Fig. 2, and it is accordingly possible to completely eliminate phenomena of refraction of incident light and to focus the optical axes onto a single spot Q for the entire wavelength region of incident light. It is therefore possible to effectively prevent occurrence of chromatic aberration.

Incident light that has become a linear polarization 6 in the above-described manner will then become an elliptical polarization 10 having an amplitude and phase that are indicatives of physical properties of the sample 8 or the sample surface 8a by being reflected by the sample surface 8a (reflecting surface). The elliptical polarization 10 will then enter the photoelastic modulator 12 to undergo phase modulation and enter the analyzer 13 thereafter. Upon passing through the optical fiber 14, it will be further passed to the spectroscope 11.

While the photoelastic modulator 12 is typically constituted of a glass bar that received periodical stress formed of piezoelectric elements, it is alternatively possible to form the elliptical polarization 10 into a linear polarization by using a rotary polarizer. It is further possible to provide the photoelastic modulator 12 or the rotary polarizer within the light incidence optical system.

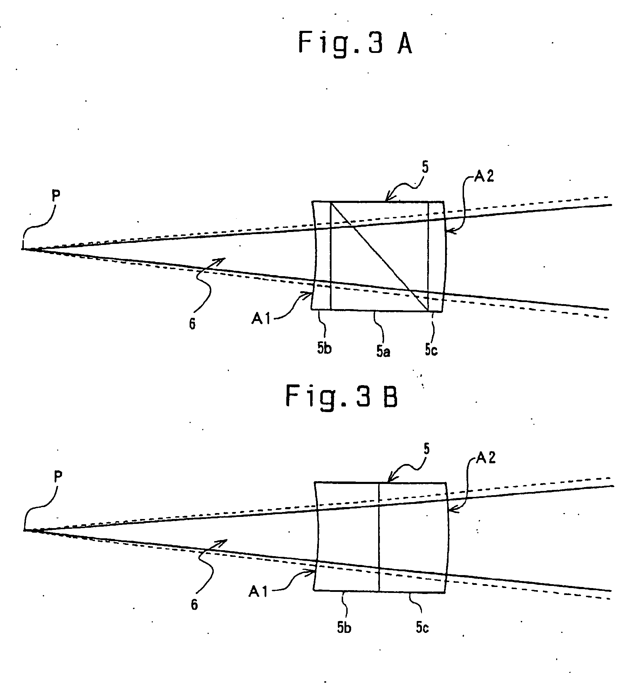

While the spherical prism 5 is formed as a uniform molded body in the above embodiment, it is alternatively possible to constitute the spherical prism 5 as a combined body of a prism body 5a having a rectangular parallelepiped body and prism bodies 5b, 5c respectively having a concave curved surface and convex curved surface A1, A2 around the center P as illustrated in Fig. 3(A), or to constitute the spherical prism 5 as a combined body of prism bodies 5b, 5c respectively having a concave curved surface and convex curved surface A1, A2 around the center P as illustrated in Fig. 3(B).

While explanations have so far been made based on an example in which the samples are semiconductor samples, it may well be understood that the invention is also applicable to measurements of surfaces of samples other than semiconductor elements, and are, for instance, of liquid crystal.

As explained so far, by setting the incident and outgoing surfaces of the prism that serves as a polarizer to be curved surfaces as in the present invention, it is possible to provide a spectral ellipsometer that is capable of easily focusing all optical axes of multiwavelengths onto one spot and of effectively preventing occurrence of chromatic aberrations, and thus to perform more precise and highly accurate measurement by using the spectral ellipsometer employing multiwavelengths.

## Claims

1. A spectral ellipsometer, comprising a light incidence optical system (1) for achieving spot incidence of polarization light of multiwavelengths onto a sample surface (8a), and a detecting optical system (9) for outputting information concerning the sample surface (8a), said information being based on an amount of change in polarization of elliptical polarization reflected by the sample surface (8a),
**characterized in**
**that** said light incidence optical system comprises a light source (2) and a polarizer (5), wherein said polarizer (5) is a prism (5), and respective shapes of a light-incident surface (A2) and a light-outgoing surface (A1) of said prism (5) are spherical surfaces centered on a center P defined as being located at said light incidence spot on said sample surface, so that said prism surfaces are orthogonal with respect to a progressing direction of respective directions of incident and outgoing light.

2. The spectral ellipsometer according to claim 1, wherein the light-incident surface (A2) is a convex curved surface, and the light-outgoing surface (A1) is a concave curved surface.

3. The spectral ellipsometer according to claim 2, wherein the prism (5) comprises a prism body having a rectangular parallelepiped body (5a) and prism bodies (5b, 5c) respectively having a concave curved surface (A1) and a convex curved surface (A2), said prism body (5) having a rectangular parallelepiped body (5a) being sandwiched between the prism bodies (5b, 5c) respectively having a concave curved surface (A1) and a convex curved surface (A2).

4. The spectral ellipsometer according to claim 2, wherein the prism (5) is a combined body of prism bodies (5b, 5c) respectively having a concave curved surface (A1) and a convex curved surface (A2).

5. The spectral ellipsometer according to claim 2, wherein the prism (5) is constituted by a uniform molded body.

## Patentansprüche

1. Spektralellipsometer mit einem optischen Lichteinfallssystem (1) zur Erzielung eines lichtfleckartigen Einfalls von polarisiertem Licht mehrerer Wellenlängen auf eine Testoberfläche (8a), und einem optischen Detektionssystem (9) zur Ausgabe von Information in Bezug auf die Testoberfläche (8a), wobei die Information auf der Größe einer Polarisationsänderung einer von der Testoberfläche (8a) reflektierten elliptischen Polarisation basiert,
**dadurch gekennzeichnet,**
**dass** das optische Lichteinfallssystem eine Lichtquelle (2) und einen Polarisator (5) aufweist, wobei der Polarisator (5) ein Prisma (5) ist und entsprechende Formen einer Lichteintrittsoberfläche (A2) und einer Lichtaustrittsoberfläche (A1) des Prismas sphärische Flächen darstellen, die um ein Zentrum P zentriert liegen, das an dem Ort des Lichteinfallsflecks auf der Testoberfläche liegt, so dass die Prismenoberflächen senkrecht zu einer Ausbreitungsrichtung von jeweils eintretendem und austretendem Licht sind.

2. Spektralellipsometer nach Anspruch 1, wobei die Lichteintrittsoberfläche (A2) eine konvex gekrümmte Oberfläche ist und die Lichtaustrittsoberfläche (A1) eine konkav gekrümmte Oberfläche ist.

3. Spektralellipsometer nach Anspruch 2, wobei das Prisma (5) einen Prismakörper mit einem rechteckförmigen Parallelpiped-Körper (5a) und Prismenkörper (5b, 5c), die jeweils eine konkav gekrümmte Oberfläche (A1) und eine konvex gekrümmte Oberfläche (A2) aufweisen, enthält, und der Prismakörper (5) mit dem rechteckförmigen Parallelpiped-Körper (5a) zwischen die Prismenkörper (5b, 5c), die eine entsprechend konkav gekrümmte Oberfläche (A1) und eine konvex gekrümmte Oberfläche (A2) aufweisen, eingelegt ist.

4. Spektralellipsometer nach Anspruch 2, wobei das Prisma (5) ein zusammengesetzter Körper aus Prismenkörpern (5b, 5c) ist, die eine entsprechend konkav gekrümmte Oberfläche (A1) und eine konvex gekrümmte Oberfläche (A2) aufweisen.

5. Spektralellipsometer nach Anspruch 2, wobei das Prisma (5) aus einem einheitlich geformten Körper aufgebaut ist.

## Revendications

1. Ellipsomètre spectral, comportant un système optique d'incidence de lumière (1) pour obtenir une incidence en spot de lumière de polarisation à multiples longueurs d'onde sur une surface d'échantillon (8a), et un système optique de détection (9) pour délivrer en sortie des informations concernant la surface d'échantillon (8a), lesdites informations étant basées sur une quantité de changement de polarisation d'une polarisation elliptique réfléchie par la surface d'échantillon (8a),
**caractérisé en ce que**
ledit système optique d'incidence de lumière comporte une source de lumière (2) et un polariseur (5), ledit polariseur (5) étant un prisme (5), et des formes respectives d'une surface d'incidence de lumière (A2) et d'une surface de sortie de lumière (A1) dudit prisme (5) étant des surfaces sphériques centrées sur un centre P défini comme étant positionné au niveau dudit spot d'incidence de lumière sur ladite surface d'échantillon, de sorte que lesdites surfaces de prisme sont orthogonales par rapport à une direction de progression de directions respectives d'une lumière incidente et sortante.

2. Ellipsomètre spectral selon la revendication 1, dans lequel la surface d'incidence de lumière (A2) est une surface incurvée convexe, et la surface de sortie de lumière (A1) est une surface incurvée concave.

3. Ellipsomètre spectral selon la revendication 2, dans lequel le prisme (5) comporte un corps de prisme présentant un corps parallélépipède rectangulaire (5a) et des corps de prisme (5b, 5c) ayant respectivement une surface incurvée concave (A1) et une surface incurvée convexe (A2), ledit corps de prisme (5) présentant un corps parallélépipède rectangulaire (5a) étant pris en sandwich entre les corps de prisme (5b, 5c) présentant respectivement une surface incurvée concave (A1) et une surface incurvée convexe (A2).

4. Ellipsomètre spectral selon la revendication 2, dans lequel le prisme (5) est un corps combiné de corps de prisme (5b, 5c) présentant respectivement une surface incurvée concave (A1) et une surface incurvée convexe (A2).

5. Ellipsomètre spectral selon la revendication 2, dans lequel le prisme (5) est constitué d'un corps moulé uniforme.
